# EUROPEAN PATENT APPLICATION

(11) **EP 1 517 546 A2**
(43) Date of publication of application: **23.03.2005**
(21) Application number: 04103091.7
(22) Date of filing: 30.06.2004
(51) Int. Cl.: H04N 5/225

(54) **A dual mode camera**

(30) Priority: 25.07.2003 KR 2003051665
(71) Applicant: Samsung Electronics Co., Ltd., Suwon-si, Gyeonggi-Do 442-742 (KR)
(72) Inventor: Lee, Dong-seok, Seoul (KR)
(74) Representative: Read, Matthew Charles

(57) **Abstract**

A folder type image photographing apparatus including a main body at which a recording medium is mounted, a display panel disposed at the main body to display a photographed image, and a camera unit coaxially disposed with respect to the display panel. The camera unit can rotate with the display panel, with the camera unit folded onto the display panel, or the camera unit can rotate independently from the display panel, providing a greater degree of control and operation selection.

## Description

In known applications, digital still cameras (DSC) convert an image which enters through a lens into a digital signal. This digital signal is stored on a recording medium such as a hard disk or a memory card. A photographed image is not recorded on a film, but stored in the recording medium so that the digital image can be directly input to the computer without it having to be scanned. To do this, the digital still camera has a high compatibility with a personal computer to allow easy editing and adjustment of the image, as well as easy transmission of the photographed image to an external computer. Further, the digital still camera is of a similar structure to a general camera so that it is easy to carry. In other words, the digital still camera has a lens, a memory, a signal modulator and a displayer. However, the digital still camera is used primarily to photograph still images due to restrictions such as a limited capacity of the recording medium that records the image. The digital still camera has the ability to video a moving image but it is almost impossible to video the moving image for long periods (e.g. hours). Therefore, being inadequate to video, record and reproduce the moving image along with a sound, the digital still camera usually is not used to video, store and reproduce moving images. Accordingly, consumers use another recording/reproducing device such as a camcorder, which records and reproduces a moving image along with sound. This usually uses a recording medium such as a tape.

The camcorder has a lens, a signal modulator, a storage section, and a display. The storage section records/reproduces the videoed image. The camcorder typically uses a cassette tape as the recording medium. The cassette tape is loaded into the storage section and records the captured motion image thereon. Also, the camcorder has a microphone and a speaker. With the cassette tape, the camcorder can video moving images for longer periods, for example, more than an hour. Although the camcorder provides a function to photograph individual still images, the image quality of the camcorder is inferior to that of the digital still camera. Hence, the camcorder is generally used to video moving images only. Further, having more functions and a more complicated structure than the digital still camera, the camcorder is generally bulky and more expensive.

In order to photograph the still image as well as the moving image, it is often required for a consumer to purchase both the digital still camera and the camcorder, as aforementioned. This is expensive. Further, as the digital still camera and the camcorder perform separate functions, the consumer has to inconveniently carry both.

Considering the above shortcomings, a so-called 'DuoCam' has been disclosed in KR-A-10-2003-1151. The DuoCam is an image photographing apparatus which combines the digital still camera and the camcorder (video camera), and currently, this type of apparatus is known. The DuoCam is basically constructed with a main body having a storage section, a camera unit rotatably disposed in the main body, and a LCD panel disposed in the main body. The DuoCam is provided with lenses for both the digital still camera and the video camera at opposite sides to each other. Therefore, the selection of whether to use the digital still camera or the video camera is made by rotating the camera unit.

However, the above DuoCam provides the camera unit and the LCD panel separately. Accordingly, in order to photograph an image, the camera unit has to be placed at a predetermined position and the position of the LCD panel has to be adjusted.

In addition, by rotating the camera unit there may occur an accident, for example, a finger of the user may become caught between the camera unit and the main body.

Accordingly, a need exists for a system and method that integrates the functionality and features of both a digital still camera and a digital video camera to overcome the difficulties presented above.

The present invention relates to a camera.

A camera according to the present invention comprises an image capture unit comprising first and second image sensing means directed in different directions and pivotably mounted to the body for rotation about the first axis in addition to the display panel, wherein the image capture unit is twistable about a second axis substantially normal to the first axis.

This is advantageous because the user can easily change between a video camera and a digital still camera without the risk of personal injury. This is achieved by rotating the camera means as opposed to the whole camera. Moreover, both the digital stills camera and the video camera are provided on a single apparatus meaning that the consumer does not need separate pieces of equipment, and the piece of equipment is small and compact.

An embodiment of the present invention will now be described, by way of example only, with reference to Figures 1-7, in which:
Figures 1 to 3 are perspective views showing a camera apparatus according to an embodiment of the present invention;
Figure 4 is a perspective view showing a camera unit of Figure 1 in a rotated state on a second axis;
Figure 5A is a partial view showing a locking hook disposed on a display panel of Figure 1;
Figure 5B is a partial view showing a locking recess disposed on a camera unit of Figure 1;
Figure 6 is a perspective view showing the camera unit received in a main body and being folded onto the display panel; and
Figure 7 is a perspective view showing the rotated state of the display panel and the camera unit of Figure 6.

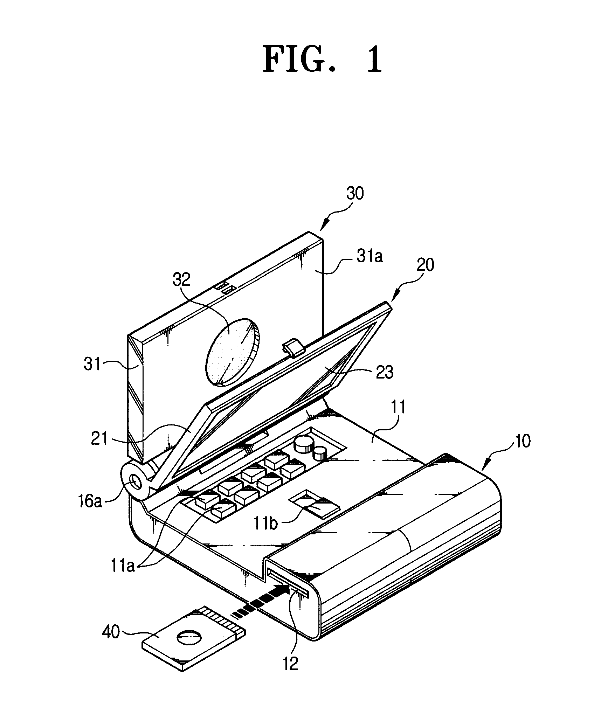

Referring to Figure 1, the image photographing apparatus includes a main body 10 into which a storage medium is loaded, a display panel 20 disposed to open/close a side of the main body 10, and a camera unit 30 moving together with the display panel 20 while being folded with the display panel 20.

A receiving portion 11 is formed along an upper side of the main body 10 to receive the display panel 20 therein. The receiving portion 11 is provided with a plurality of keys 11a to change respective functions of the photographing apparatus. A zooming knob 11b is provided for a zooming operation. On a side of the main body 10, a memory stick mounting portion 12 is provided into which a memory stick 40 is inserted.

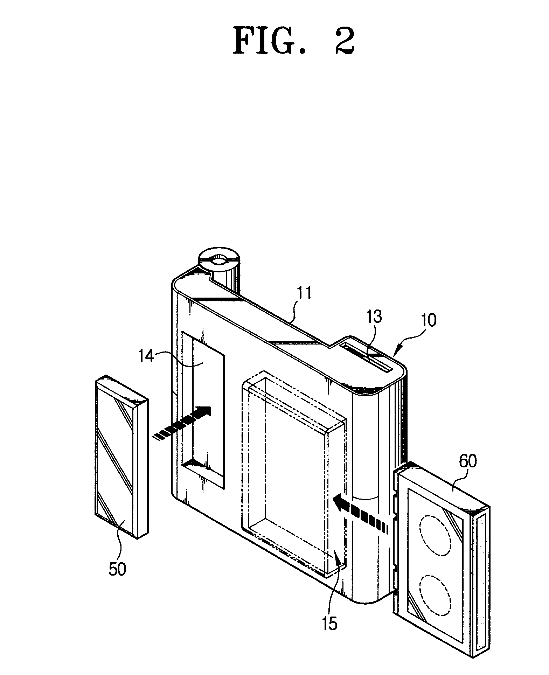

Referring to Figure 2, a battery mounting portion 14 is formed on a rear side of the main body 10 to receive a battery 50 therein. Also, a tape deck 15 is disposed on the rear side of the main body 10 so as to move in and out of the main body 10. A video tape cassette 60 is inserted into the tape deck 15 which stores images including a moving image. The structure of the tape deck 15 is known to those skilled in the art, and is applied to various products such as a camcorder.
Therefore, the detailed description thereof will be omitted.

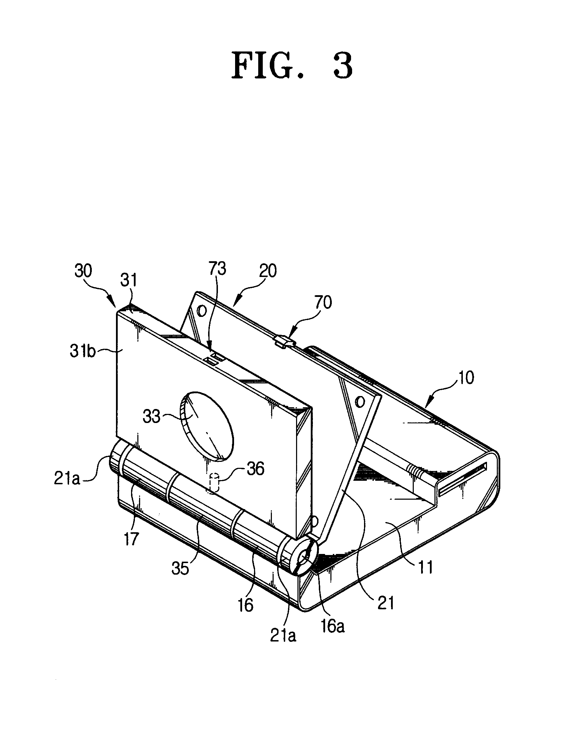

As shown in Figure 3, a pair of shaft portions 16 and 17 are coaxially fixed to a side of the main body 10. The shaft portions 16 and 17 are fixed to the main body 10 at a predetermined distance from each other, and at opposite ends of a first shaft 35. The shaft portions 16 and 17 extend axially from the first shaft 35 toward shaft portions 21 a, upon which the display panel 20 is rotatably connected. Accordingly, both ends of each shaft portion 16 and 17 are provided with a supporting shaft 16a to which the display panel 20 is rotatably connected.

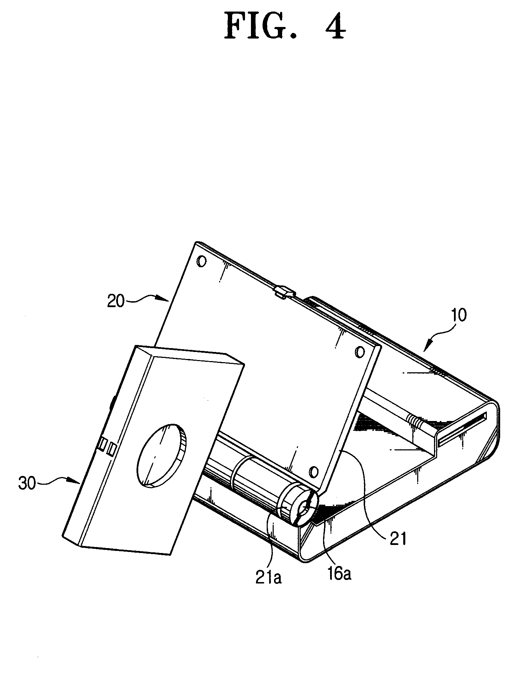

The display panel 20 has a panel body 21 which is supported by the supporting shaft 16a and a LCD 23 disposed at a side of the panel body 21 to display the photographed image. The LCD 23 is disposed opposite the upper side of the main body 10, so as to face to the receiving portion 11. The display panel 20 is positioned to fit into the receiving portion 11 or, as shown in Figure 4, is pivoted to maintain a predetermined angle with respect to the upper side of the main body 10. For this, a pair of further shaft portions 21a are disposed at a side of the panel body 21. Hence, the further shaft portions 21a are rotatably connected to the supporting shaft 16a.

Referring to Figures 1 and 3, the camera unit 30 is disposed so as to rotate along with the display panel 20. The camera unit 30 has a first camera portion 32 exposed through a first side 31a of a unit body 31, and a second camera portion 33 exposed through a second side 31b. The first camera portion 32 is for the digital video camera which videos moving images. The second camera portion 33 is for the digital still camera which photographs still images. Each camera portion 32 and 33 is disposed in the unit body such that only one of the camera portions 32 or 33 can be selectively operated at a time.

As shown in Figure 3, the camera unit 30 has a first shaft 35 coaxially connected to the rotation axis of the display panel 20 and a second shaft 36 disposed at a right angle to the direction of the axis of the first shaft 35. The first shaft 35 is rotatably interposed between the shaft portions 16 and 17 of the main body 10. Accordingly, due to the first shaft 35 and the second shaft 36, the camera unit 30 may rotate with respect to each of shafts 35 and 36 which are at right angles to each other. In other words, the camera unit 30 can be rotated on the first shaft 35 together with the display panel 20. The rotation of the camera unit 30 and the display panel 20 will be in the same direction. As shown in Figure 4, the camera unit 30 can also rotate on the second shaft 36, and accordingly, the camera unit 30 can rotate independently of the display panel 20. Therefore, a mode and direction of photography can be changed by altering the direction of the camera portions 32 and 33 of the camera unit 30. Since the mechanical structure of the first and the second shafts 35 and 36 is well known, a detailed description thereof is omitted.

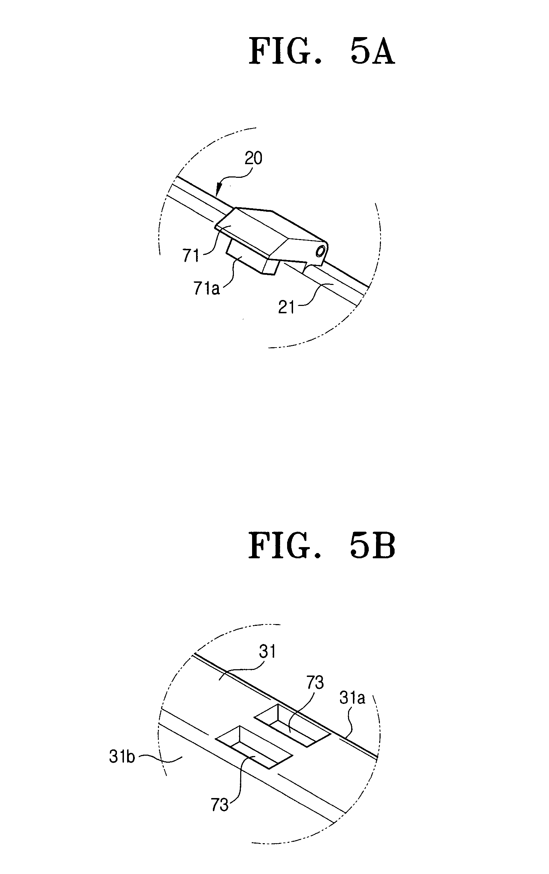

In addition, a locking unit 70 is provided to connect the camera unit 30 and the display panel 20 together. This allows rotation of the camera unit 30 integrally with the display panel 20. The locking unit 70 includes a hook member 71 formed at an outer side of the display panel 20, and a corresponding locking recess 73 formed at an outer side of the camera unit 30. The hook member 71, as shown in Figure 5A, is pivotably disposed at a side of the panel body 21 of the display panel 20. The hook member 71 has a hook projection 71a which can be locked with the locking recess 73.

Preferably, as shown in Figure 5B, a pair of the locking recesses 73 are formed at an outer side of the camera unit 30. In other words, a pair of the locking recesses 73 are formed to lock and connect the camera unit 30 and the display panel 20 together according to the rotation of the camera unit 30. In other words, the camera unit 30 and the display panel 20 can be locked together in cases where either the first or the second side 31a or 31b face the display panel and is folded onto the display panel 20. Each locking recess 73 is located the same distance from the both the first and the second side 31a and 31b, respectively.

A method to operate the folder type image photographing apparatus according to the embodiment of the present invention is described below.

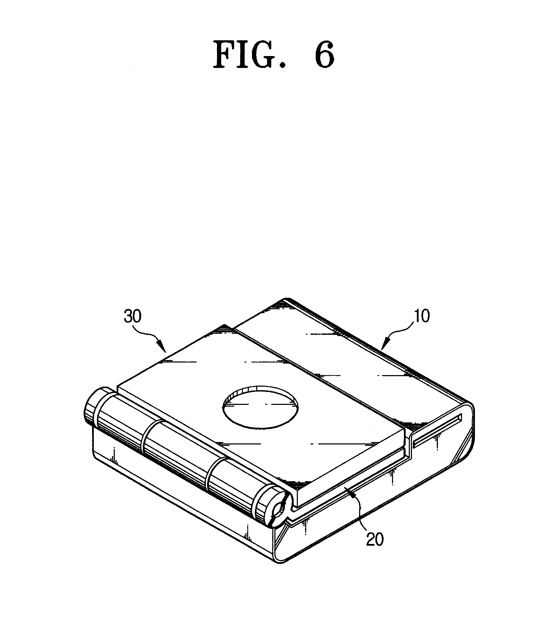

Referring to Figure 6, the display panel 20 is mounted in the receiving portion 11 on the upper side of the main body 10 and covers the upper portion of the main body 10. Also, the camera unit 30 is folded onto the upper portion of the display panel 20 so as to cover the upper portion of the main body 10.

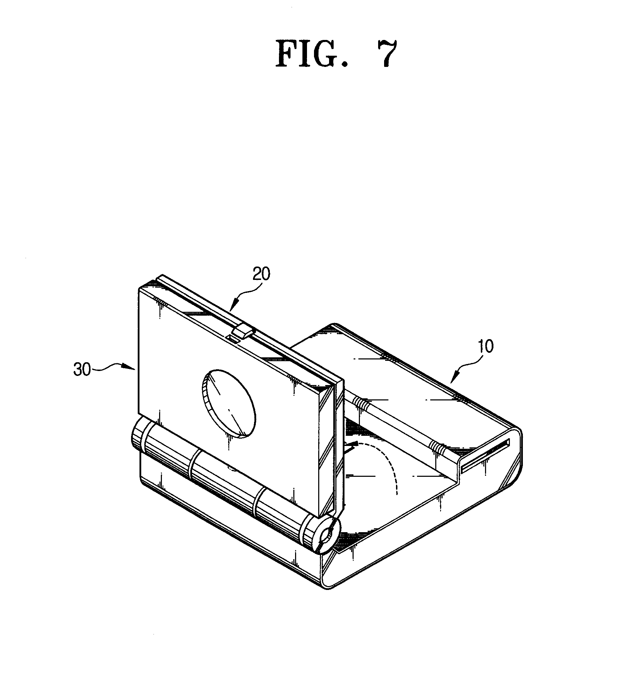

In order to photograph the image, the display panel 20 and the camera unit 30 are rotated together and unfolded from the upper side of the main body 10 as shown in Figure 7. It is possible to rotate the camera unit 30 and the display panel 20 together due to the connection made by the locking unit 70.

A user may photograph the image by using the keys 11a and the zoom knob 11b on the main body 10. In other words, the user grasps the main body 10 with one hand and photographs the image while seeing the image to be photographed through the display panel 20.

If the user wants to change the photographing mode while photographing the image, e.g., if the user wants to photograph the still image instead of videoing the image, or vice versa, the user unlocks the locking unit 70 and unfolds the camera unit 30 from the display panel 20 to a predetermined distance as shown in Figure 1. Then, the user rotates the camera unit 30 at an angle of 180 degrees so that the camera portion 32 or 33 corresponding to the desired photographing mode is exposed outward, as shown in Figure 4. Finally, the user locks the display panel 20 and the camera unit 30 again and continues to photograph the image.

As discussed above, by forming the display panel 20 and the camera unit 30 in a foldable manner, its operation and structure is made more simple. Further, it is possible to obtain a compact design, slimness, and convenience required for a next-generation digital electronic product.

As shown in Figure 4, the user may set a photographing mode to photograph the image while the camera unit 30 is not connected to the display panel 20 and rotated at a predetermined angle on the second shaft 36. In this case, the user photographs the image from all angles in a natural manner without having to change his/her postures or hand positions.

As described above, according to the embodiment of the present invention, the image photographing apparatus is constructed as the folder type that allows rotating of the camera unit and the display panel while both are in a folded state together.

Hence, changing the operation of the photographing apparatus according to the changed position of the camera unit and the display panel becomes easy. Also, the size of the photographing apparatus is both compact and slim.

In addition, since the camera unit is rotated with respect to the two rotational axis, and independently from the display panel, the image can be photographed from all angles without being limited by the posture of the user.

## Claims

1. A camera comprising:
a body (10);
a display panel (20) pivotably mounted to the body for rotation about a first axis (35); and
an image capture unit (31) comprising first and second image sensing means (31a, 31b) directed in different directions and pivotably mounted to the body for rotation about the first axis (35) in addition to the display panel (20),
wherein the image capture unit (31) is twistable about a second axis (36) substantially normal to the first axis (35).

2. A camera according to claim 1, wherein the image capture unit (31) and the display panel (20) constitute first and second leaves.

3. A camera according to claim 2, wherein the display panel (20) is sandwiched between the image capture unit (31) and the body (10).

4. A camera according to any one of claims 1 - 3, wherein the body (10) comprises a recess (11) arranged to receive the display panel (20) and the image capture unit (31) therein when folded away.

5. A camera according to any one of claims 1 - 4, comprising:
locking means (71) operable to secure the image capture unit (31) to the display means (20).

6. A camera according to any one of claims 1 - 5, wherein the first and second sensing means (31a, 31b) are still camera means and video camera means, respectively.

7. A camera according to claim 6 comprising:
still image storage means and moving image storage means, wherein the first and second sensing means (31a, 31b) are arranged to store still images in the still image storage means and moving images in the moving image storage means, respectively.

8. A folder type image photographing apparatus comprising:
a main body at which a recording medium is mounted;
a display panel disposed at the main body and rotatable about a first axis to display a photographed image; and
a camera unit coaxially disposed with respect to the display panel and rotatable about the first axis, the camera unit being further rotatable about a second axis to select between a first and second camera.

9. An apparatus as claimed in claim 8, wherein the first axis is perpendicular to the second axis.

10. An apparatus as claimed in claim 8, further comprising:
a locking unit to removably secure the camera unit to the display panel.

11. An apparatus as claimed in claim 8, wherein the camera unit is rotatable about the second axis independent of the display panel.

12. An apparatus as claimed in claim 8, wherein the first camera is disposed on a first surface of the camera unit to capture motion images and the second camera is disposed on a second surface of the camera unit to capture still images.

13. A multifunction photographing apparatus comprising:
a camera unit rotatably disposed with respect to the photographing apparatus and rotatable about a first axis, the camera unit being further rotatable about a second axis to select between a first and second camera.

14. An apparatus as claimed in claim 13, wherein the first axis is substantially perpendicular to the second axis.

15. An apparatus as claimed in claim 13, wherein:
the first camera is disposed on a first surface of the camera unit to capture motion images; and
the second camera is disposed on a second surface of the camera unit to capture still images.

16. A method for providing a folder type image photographing apparatus for changing photographing modes while photographing an image, comprising the steps of:
providing a display panel and a camera unit to be rotatable about a first axis from an upper side of a main body of the image photographing apparatus;
providing a locking unit for allowing the display panel and the camera unit to be secured and rotatable together about the first axis; and
providing the camera unit to be rotatable about a second axis to select between a first and second camera.

17. A method as claimed in claim 16, further comprising changing photographing modes, comprising the steps of:
unlocking the locking unit and rotating the camera unit about the first axis from the display panel to a predetermined distance; and
rotating the camera unit about the second axis such that the first or second camera corresponding to a desired photographing mode is exposed.

18. A method as claimed in claim 17, wherein the first axis is perpendicular to the second axis.

19. A method as claimed in claim 17, wherein, the first camera is disposed on a first surface of the camera unit to capture motion images, and the second camera is disposed on a second surface of the camera unit to capture still images.

20. A method for changing photographing modes in a folder type image photographing apparatus, comprising the steps of:
rotating a camera unit about a first axis from the apparatus to a predetermined distance; and
rotating the camera unit about a second axis such that the first or second camera corresponding to a desired photographing mode is exposed.

21. A method as claimed in claim 20, wherein, the first camera is disposed on a first surface of the camera unit to capture motion images, and the second camera is disposed on a second surface of the camera unit to capture still images.

22. A method as claimed in claim 20, wherein the first axis is perpendicular to the second axis.
